# EUROPEAN PATENT SPECIFICATION

(11) **EP 3 389 359 B1**
(45) Date of publication and mention of the grant of the patent: **01.09.2021**
(21) Application number: 16822226.3
(22) Date of filing: 22.11.2016
(51) Int. Cl.: A01G 13/02, A01G 9/16

(54) **POLYTUNNEL STRUCTURE**
FOLIENTUNNELSTRUKTUR
STRUCTURE D'ABRIS TUNNEL

(30) Priority: 15.12.2015 GB 201522120
(43) Date of publication of application: 24.10.2018
(73) Proprietor: Haygrove Limited, Ledbury, Hereford and Worcester HR8 2JL (GB)
(72) Inventor: WHATTON, Rolly, Ledbury, Hereford and Worcester HR8 2JL (GB); CORMACK, James, Ledbury, Hereford and Worcester HR8 2JL (GB)
(74) Representative: Bazant-Hegemark, Florian
(86) International application number: PCT/GB2016/053635
(87) International publication number: WO 2017/103561

(56) References cited:
- DE-A1-102014 005 095
- FR-A1- 2 643 934
- GB-A- 2 397 005
- GB-A- 2 407 105

## Description

This invention relates to a polytunnel structure according to the appended claims.

One form of polytunnel structure in common use comprises a series of rows of legs and arcuate cover support members extending between each leg of one of the rows and a corresponding leg of an adjacent one of the rows. It is common for a series of such structures to be provided side-by-side, in which case it is usual for each leg to carry an end of a cover support member of one of the tunnels and an end of a cover support member of an adjacent one of the tunnels. The legs used in arrangements of this type are generally bifurcated at their upper ends to define a pair of limbs, each of which is used in supporting a respective one of the cover support members.

Where a single polytunnel structure is required, then the use of legs of the above described type is inappropriate. Typically, where is a single polytunnel is required, then rows of legs in the form of simple steel tubes are driven into the underlying ground surface, for example by being hammered into the ground, and then arcuate tunnel support members are attached thereto by sliding the tubular end parts of the support members over the legs. Usually, the end part of the support member then rests upon the ground surface. One disadvantage of arrangements of this type is that the legs provide little resistance to upwardly applied loads as may occur under windy conditions. Accordingly, there is a risk of the legs simply being pulled out of the ground and/or of the support members lifting from the legs. Furthermore, no anchorage points are provided to allow anchoring of cover retaining ropes or the like.

DE102014005095 describes a leg for a dual skinned polytunnel or the like.

It is an object of the invention to provide a polytunnel leg in which at least some of the disadvantages associated with known arrangements are overcome or are of reduced effect. According to the present invention there is provided a structure as defined by appended Claim 1.

It will be appreciated that the leg of the invention is advantageous in that the presence of the screw flight resists axially applied loads, and so reduces the risk of the leg being pulled from the ground, in use.

In use, ropes, straps or the like which extend over a tunnel cover can be anchored to the attachment formations to secure the cover against movement.

Where a vent arrangement is provided whereby part of the cover can be rolled up to increase ventilation within the polytunnel structure, then if the ropes, straps or the like are anchored too closely to the longitudinal axes of the legs, they may impede operation of the vent arrangement. By providing the attachment formations at different spacings, the ropes, straps or the like can be anchored close to the axes of the legs where no vent arrangement is provided, and anchored at an increased distance or spacing therefrom where a vent arrangement is provided. As a result, ventilation can be provided when desired, with good anchorage of the cover being maintained when no vent arrangement is provided.

The first and second attachment formations are preferably angularly spaced apart upon the attachment plate, for example spaced apart by 90° or by 180°. In use, by adjusting the angular orientation of the attachment plate, the appropriate attachment formation can be positioned in a desired location for use in anchoring the ropes or the like.

The attachment plate is preferably further provided with one or more drive formations whereby a drive tool can be attached thereto to aid rotation of the elongate member and driving of the anchor region thereof into the ground. By way of example, the drive formations may take the form of openings.

The position of the attachment plate upon the elongate member is conveniently such that when the anchor region has been driven into the ground by a desired distance, the attachment plate is located substantially at the ground surface. The attachment plate thus further forms a guide or indicator to indicate when the elongate member has been driven into the ground by an appropriate distance.

The support region may be of substantially circular cross-section. Alternatively, it may be of non-circular cross-section. For example, it may be of cross sectional shape including a pair of semi-circular ends interconnected by flat or straight sides. Alternatively it could be of, for example, substantially rectangular or elliptical form. The cover support member is preferably of similarly shaped cross sectional shape, at least adjacent its ends. Where the support region and the cover support member are of non-circular shape, it will be appreciated that relative angular movement between the leg and the cover support member is resisted, which may be preferably in some circumstances.

The support region may be located substantially immediately adjacent the attachment plate. Alternatively, it may be spaced therefrom. Where spaced from the attachment plate, it will be appreciated that the cover support member may be supported at an increased distance above the ground.

The invention will further be described, by way of example, with reference to the accompanying drawings, in which:
Figure 1 is a perspective view illustrating a leg in accordance with an embodiment of the invention;
Figure 2 is a plan view illustrating part of the leg of Figure 1;
Figures 3 and 4 are views illustrating the leg of Figure 1 in two different configurations, in use;
Figure 5 is a diagram illustrating a tunnel structure incorporating the leg of Figures 1 to 4;
Figures 6 and 7 are views illustrating an alternative design of leg in accordance with an embodiment of the invention; and
Figures 8 and 9 are views illustrating another design of leg in accordance with an embodiment of the invention.

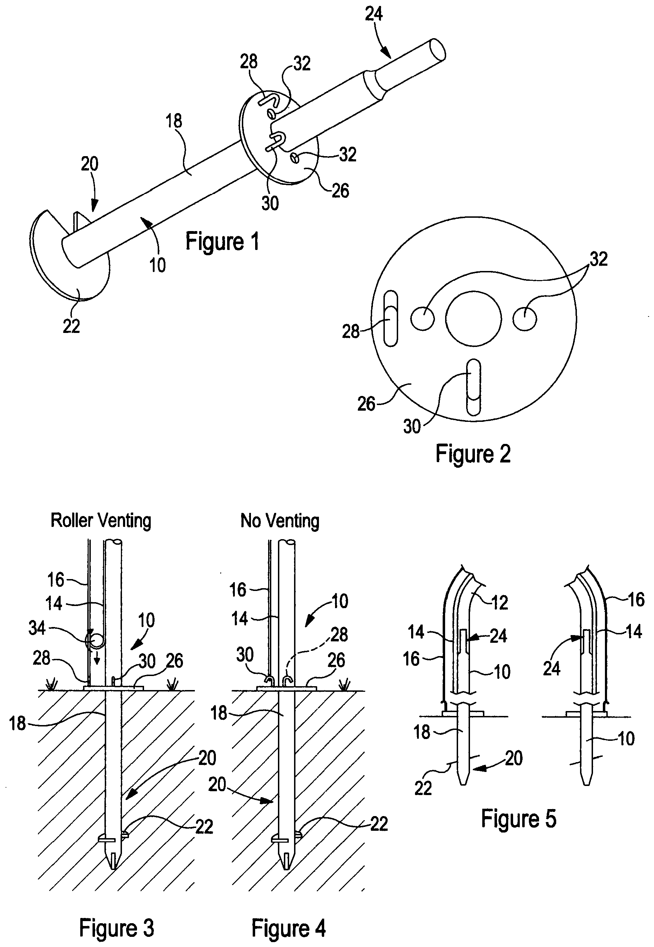

Referring firstly to Figure 5, a polytunnel structure is illustrated that comprises a pair of rows of legs 10, a series of cover support members 12 supported by the legs 10, and a cover 14 stretched over and supported by the cover support members 12, ropes 16 or the like extending over the cover 14 and being anchored in such a manner as to secure the cover 14 in position.

As shown in Figure 1, each leg 10 takes the form of an elongate shaft or member 18 of generally circular cross section, the member 18 being of tapering, generally pointed form, at one end, and being of reduced diameter at its opposite end. The pointed end of the member 18 may be formed by deformation of the wall thereof. The reduced diameter part is conveniently formed by swaging. The part of the member 18 adjacent the tapering, pointed part forms an anchor region 20 at which a generally helical screw flight 22 is secured to the member 18, for example by being welded thereto. It will be appreciated that, in use, with the leg 10 in a position in which the flight 22 engages the ground, rotation of the member 18 about a longitudinal axis thereof will result in the member 18 being driven axially, either further into the ground or out of the ground depending upon the direction of rotary movement thereof.

The reduced diameter end of the member 18 defines a support region 24 over which an end part of the cover support member 12 can be slid, during assembly, the cooperation between the support region 24 and the cover support member 12 ensuring that, in use, the cover support member 12 is supported in a desired position and orientation. As shown, the ends of the cover support member 12 are conveniently supported at a height spaced above the ground surface. It desired, an appreciate fitting may be used to positively secure the cover support member 12 to the legs 10.

Between the anchor region 20 and the support region 24, the leg 10 is provided with an attachment plate 26. The attachment plate 26 is, in the arrangement shown, of generally circular or disc-like form, concentric with the member 18, and rigidly secured to the member 18 such that relative movement therebetween is not permitted. A pair of attachment formations in the form of attachment hooks 28, 30 are secured, for example by welding, to the attachment plate 26. Whilst the use of separate components secured to the attachment plate is preferred, arrangements may be possible in which the attachment formations are integrally formed with the attachment plate, for example being punched therefrom. Furthermore, other assembly techniques may be used. For example, the attachment formations could be threadedly secured in position rather than being welded to the attachment plate, if desired. The hooks 28, 30 are angularly spaced about the axis of the attachment plate 26, spaced apart in the arrangement illustrated by an angle in the region of 90°.

In accordance with the invention, the first and second attachment hooks 28, 30 are not equally spaced from the longitudinal axis of the member 18. Rather, as shown, the first attachment hook 28 is located relatively close to the periphery of the attachment plate 26, and the second attachment hook 30 is located relatively close to the member 18.

The attachment plate 26 is formed with a pair of drive formations in the form of openings 32 positioned for engagement with a suitable tool to aid driving of the leg 10 into the ground at the desired location. The tool may be a motorised tool, if desired.

In use, therefore, in order to construct a polytunnel structure in the desired location, legs 10 are driven into the ground to form a pair of rows of legs. Each leg 10 is driven by being rotated, using a suitable tool engaged with the openings 32 to impart rotation to the leg 10, the cooperation of the flight 22 with the ground in combination with the rotation of the leg 10 resulting in the leg 10 being driven into the ground. Driving of the leg 10 into the ground continues until the attachment plate 26 lies substantially at the ground surface, providing an indication that the leg 10 have been driven into the ground to an appropriate depth.

By way of example, the openings 32 may allow a manual, pneumatic or mechanical drilling union to be slid over the upper end of the leg 10 and to drivingly engage the leg 10 to allow it to be driven into the ground.

Once the legs 10 have been positioned in this manner, the arcuate cover support members 12 are mounted upon the legs 10, each cover support member 12 being mounted, at one end, upon one of the legs 10 of one of the rows, and at its opposite end upon a respective one of the legs 10 of the other of the rows. The mounting of the cover support members 12 on the legs 10 involves introducing the support regions 24 of the legs 10 into the hollow interiors of the ends of the cover support members 12.

It will be appreciated that once the cover support members 12 are mounted upon the legs 10 in this fashion, the cover support members 12 are well supported and movement thereof is restricted.

The cover 14 is then positioned over the cover support members 12, and is anchored in position using anchor ropes 16 or the like, the ropes 16 being anchored to one or other of the hook formations 28, 30 provided on each of the legs 10. Typically, the ropes 16 will extend in a zig-zag fashion over substantially the full length of the tunnel structure.

As shown in Figure 3, where a vent arrangement 34 is provided to enable rolling up of part of the cover 14 to increase ventilation of the tunnel, then the first hook formations 28 are used in anchoring the ropes 16, thereby holding the ropes 16 at a relatively great distance from the elongate member 18 and so allowing movement of the vent arrangement. Where no vent arrangement is provided then, as shown in Figure 4, the second hook formations 30 are preferably used in securing the ropes 16 in position, to secure the cover 14 in position and minimise flapping of the cover 14. It will be appreciated, that, during construction, the angular positions of the legs 10 determines which of the hook formations 28, 30 are to be used. Accordingly, during the step of driving the legs 10 into the ground, care should be taken to ensure that that the angular positions of the legs 10 results in the desired ones of the hook formations 28, 30 being left in the in-use position. If, after installation, a vent arrangement 34 is retro-fitted or removed, then by adjusting the angular positions of the legs 10, the appropriate ones of the hooks formations may be moved to the appropriate in-use positions for use in anchoring the cover against movement.

It will be appreciated that the precise location of the attachment plate 26 will depend upon the application in which the invention is employed. Likewise, the spacing of the reduced diameter support region 24 from the plate 26 will depend upon the application in which the invention is used.

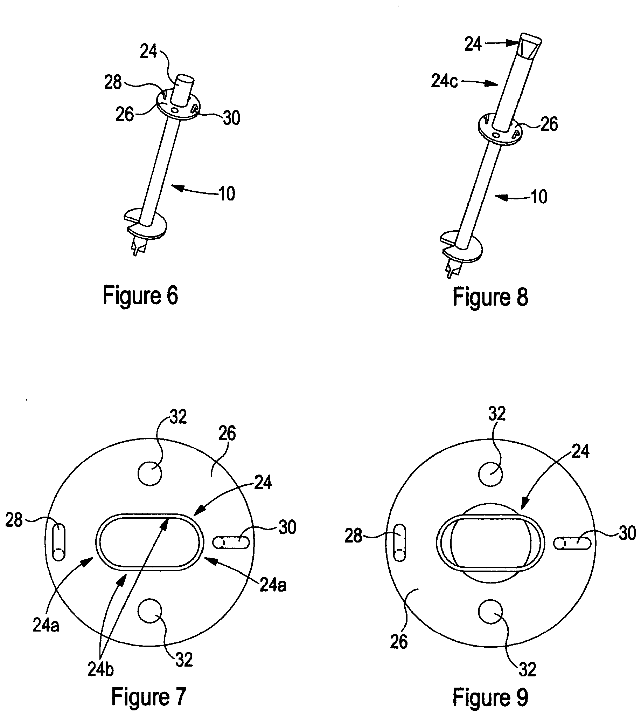

In the arrangement described hereinbefore, the support region 24 and the end of the cover support member 12 are both of substantially circular cross sectional shape. It will be appreciated that this need not always be the case and Figures 6 and 7 illustrate an embodiment in which the cover support member 12, or at least the ends thereof, and the support region 24, are of non-circular form. In this embodiment, the support region 24 is of cross-sectional shape having a pair of semi-circular regions 24a interconnected by flats 24b. The cover support member 12 is of a similar cross-sectional shape, at least at its ends. Such an arrangement is advantageous in that relative angular movement between the cover support member 12 and the leg 10 is restricted or resisted.

It will be appreciated that other non-circular cross-sectional forms may be used without departing from the scope of the invention.

As with the arrangement described hereinbefore, the attachment plate 26 is provided with hooks 28, 30 spaced by different distances from the axis of rotation of the leg 10. In this embodiment, the hooks 28, 30 are angularly spaced apart from one another by 180°. This spacing is advantageous as the non-circular shape of the support region 24 only allows mounting of the cover support member 12 thereto in two angular orientations of the leg 10 spaced apart from one another by 180°.

Other than as outlined above the arrangement of Figures 6 and 7 is substantially as hereinbefore described with reference to the other drawings, and the benefits of the invention as described in relation to the embodiment of Figures 1 to 5 are also applicable to this arrangement.

In the arrangements described hereinbefore, the lower ends of the cover support members 12 are supported by the legs at a height spaced only by a small distance above the ground surface. It will be appreciated that, depending upon the design of the polytunnel structure, it may be preferred for the cover support members 12 to be supported at a greater height, for example to achieve a greater headroom within the polytunnel structure. Figures 8 and 9 illustrate a design of leg 10 in which the support region 24 is spaced from the attachment plate 26 by an extension 24c so that the cover support member 12 is supported at an increased elevation. Conveniently, the extension 24c is of circular cross-sectional shape, the non-circular support region 24 being formed by swaging of the upper end of the extension 24c. It will be appreciated, however, that other manufacturing techniques are possible within the scope of the invention. Although Figures 8 and 9 illustrate this in connection with a leg 10 having a non-circular cross-section support region 24 and in which the hooks 28, 30 are angularly spaced by 180°, this modification may also be applied to the arrangement described hereinbefore with reference to Figures 1 to 5.

Whilst the description hereinbefore is of one specific embodiment of the invention, it will be appreciated that a wide range of modifications and alterations may be made thereto without departing from the scope of disclosure. The scope of the invention is defined by the appended claims.

## Claims

1. A polytunnel structure comprising a pair of rows of legs (10), each leg (10) of one of the rows and a corresponding leg (10) of another of the rows together supporting a cover support member (12), the cover support members (12) supporting a cover (14), the cover (14) being anchored in position by ropes (16), straps or the like extending over the cover (14) and anchored to the legs (10), wherein at least one of the legs (10) comprises an elongate member (18) having an anchor region (20) upon which a screw flight (22a) is provided, a support region (24) to which, in use, part of the cover support member (12) is secured, and an attachment plate (26) provided with a first attachment formation (28) and a second attachment formation (30), the first and second attachment formations (28, 30) taking the form of hooks or hook like formations, **characterised in that** the first and second attachment formations (28, 30) are spaced from a longitudinal axis of the elongate member (18) by different spacings such that, depending upon which attachment formation (28, 30) is used, the anchor rope (16), strap or the like can be selectively secured relatively close to the axis of the axis or at an increased distance from the axis.

2. A structure according to Claim 1, wherein the hooks are welded to the attachment plate (26).

3. A structure according to any of the preceding claims, wherein the first and second attachment formations (28, 30) are angularly spaced apart about the longitudinal axis upon the attachment plate (26).

4. A structure according to Claim 3, wherein the attachment formations (28, 30) are angularly spaced apart about the longitudinal axis by approximately 90°.

5. A structure according to Claim 3, wherein the attachment formations (28, 30) are angularly spaced apart about the longitudinal axis by approximately 180°.

6. A structure according to any of the preceding claims, wherein the attachment plate (26) is further provided with one or more drive formations whereby a drive tool can be attached thereto to aid rotation of the elongate member (18) and driving of the anchor region thereof into the ground.

7. A structure according to Claim 6, wherein the drive formations comprise openings.

8. A structure according to any of the preceding claims, wherein the position of the attachment plate (26) upon the elongate member (18) is such that when the anchor region (26) has been driven into the ground by a desired distance, the attachment plate (26) is located substantially at the ground surface.

9. A structure according to any of the preceding claims, wherein the support region (24) comprises a region of the member of reduced diameter.

10. A structure according to any of the preceding claims, wherein the support region (24) is of substantially circular cross-sectional shape.

11. A structure according to any of Claims 1 to 9, wherein the support region (24) is of non-circular shape.

12. A structure according to Claim 11, wherein the support region (24) is of shape comprising a pair of semi-circular regions spaced apart by flat or straight regions.

13. A structure according to any of the preceding claims, wherein the cross-sectional shape of an end of the cover support member (12) substantially conforms with a cross-sectional shape of the support region (24).

## Patentansprüche

1. Polytunnelstruktur, umfassend ein Paar Reihen von Beinen (10), wobei jedes Bein (10) von einer der Reihen und ein entsprechendes Bein (10) von einer anderen der Reihen zusammen ein Abdeckstützelement (12) stützen, wobei die Abdeckstützelemente (12) eine Abdeckung (14) stützen, wobei die Abdeckung (14) durch Seile (16), Riemen oder dergleichen, die sich über die Abdeckung (14) erstrecken und an den Beinen (10) verankert sind, in Position verankert ist, wobei zumindest eines der Beine (10) ein längliches Element (18) umfasst, das einen Ankerbereich (20), auf dem ein Schraubengang (22a) bereitgestellt ist, einen Stützbereich (24), an dem im Gebrauch ein Teil des Abdeckstützelements (12) befestigt ist, und eine Anbringungsplatte (26) aufweist, die mit einer ersten Anbringungsformation (28) und einer zweiten Anbringungsformation (30) bereitgestellt ist, wobei die erste und die zweite Anbringungsformation (28, 30) die Form von Haken oder hakenähnlichen Formationen annehmen, **dadurch gekennzeichnet, dass** die erste und die zweite Anbringungsformation (28, 30) von einer Längsachse des länglichen Elements (18) durch unterschiedliche Abstände beabstandet sind, sodass abhängig davon, welche Anbringungsformation (28, 30) verwendet wird, das Seil (16), der Riemen oder dergleichen zur Verankerung selektiv relativ nah an der Achse der Achse oder in einem vergrößerten Abstand zu der Achse befestigt werden kann.

2. Struktur nach Anspruch 1, wobei die Haken an die Anbringungsplatte (26) geschweißt sind.

3. Struktur nach einem der vorhergehenden Ansprüche, wobei die erste und die zweite Anbringungsformation (28, 30) auf der Anbringungsplatte (26) winkelmäßig um die Längsachse beabstandet sind.

4. Struktur nach Anspruch 3, wobei die Anbringungsformationen (28, 30) um ungefähr 90° winkelmäßig um die Längsachse beabstandet sind.

5. Struktur nach Anspruch 3, wobei die Anbringungsformationen (28, 30) um ungefähr 180° winkelmäßig um die Längsachse beabstandet sind.

6. Struktur nach einem der vorhergehenden Ansprüche, wobei die Anbringungsplatte (26) ferner mit einer oder mehreren Antriebsformationen bereitgestellt ist, wodurch ein Antriebswerkzeug daran angebracht werden kann, um bei Drehung des länglichen Elements (18) und Treiben des Ankerbereichs davon in den Boden zu helfen.

7. Struktur nach Anspruch 6, wobei die Antriebsformationen Öffnungen umfassen.

8. Struktur nach einem der vorhergehenden Ansprüche, wobei die Position der Anbringungsplatte (26) auf dem länglichen Element (18) so ist, dass, wenn der Ankerbereich (26) um einen gewünschten Abstand in den Boden getrieben worden ist, sich die Anbringungsplatte (26) im Wesentlichen an der Bodenoberfläche befindet.

9. Struktur nach einem der vorhergehenden Ansprüche, wobei der Stützbereich (24) einen Bereich des Elements mit reduziertem Durchmesser umfasst.

10. Struktur nach einem der vorhergehenden Ansprüche, wobei der Stützbereich (24) eine im Wesentlichen kreisförmige Querschnittsform aufweist.

11. Struktur nach einem der Ansprüche 1 bis 9, wobei der Stützbereich (24) eine nichtkreisförmige Form aufweist.

12. Struktur nach Anspruch 11, wobei der Stützbereich (24) eine Form aufweist, die ein Paar halbkreisförmiger Bereiche umfasst, die durch flache oder gerade Bereiche beabstandet sind.

13. Struktur nach einem der vorhergehenden Ansprüche, wobei die Querschnittsform eines Endes des Abdeckstützelements (12) im Wesentlichen einer Querschnittsform des Stützbereichs (24) entspricht.

## Revendications

1. Structure de serre tunnel comprenant une paire de rangées d'embase (10), chaque embase (10) de l'une des rangées et une embase correspondante (10) d'une autre des rangées supportant ensemble un élément de support de couverture (12), lesdits éléments de support de couverture (12) supportant une couverture (14), la couverture (14) étant ancrée en position par des câbles (16), des sangles ou similaires s'étendant sur la couverture (14) et ancrés aux embases (10), au moins l'une des embases (10) comprenant un élément allongé (18) possédant une zone d'ancrage (20) sur laquelle un filet de vis (22a) est disposé, une zone de support (24) à laquelle, lors de l'utilisation, une partie de l'élément de support de couverture (12) est fixée, et une plaque de fixation (26) dotée d'une première formation de fixation (28) et d'une seconde formation de fixation (30), les première et seconde formations de fixation (28, 30) prenant la forme de crochets ou de formations similaires à des crochets, **caractérisée en ce que** les première et seconde formations de fixation (28, 30) sont espacées de l'axe longitudinal de l'élément allongé (18) par des espacements différents tels que, en fonction de la formation de fixation (28, 30) utilisée, le câble d'ancrage (16), la sangle ou similaire puisse être fixé de manière sélective, relativement près de l'axe de l'axe ou à une distance accrue de l'axe.

2. Structure selon la revendication 1, lesdits crochets étant soudés à la plaque de fixation (26).

3. Structure selon l'une quelconque des revendications précédentes, lesdites première et seconde formations de fixation (28, 30) étant espacées angulairement autour de l'axe longitudinal sur la plaque de fixation (26).

4. Structure selon la revendication 3, lesdites formations de fixation (28, 30) étant espacées angulairement autour de l'axe longitudinal d'environ 90°.

5. Structure selon la revendication 3, lesdites formations de fixation (28, 30) étant angulairement espacées autour de l'axe longitudinal d'environ 180°.

6. Structure selon l'une quelconque des revendications précédentes, ladite plaque de fixation (26) étant en outre dotée d'une ou plusieurs formations d'entraînement grâce auxquelles un outil d'entraînement peut être fixé à celle-ci pour faciliter la rotation de l'élément allongé (18) et l'entraînement de la zone d'ancrage de celui-ci dans le sol.

7. Structure selon la revendication 6, lesdites formations d'entraînement comprenant des ouvertures.

8. Structure selon l'une quelconque des revendications précédentes, ladite position de la plaque de fixation (26) sur l'élément allongé (18) étant de sorte que lorsque la zone d'ancrage (26) a été enfoncée dans le sol sur une distance souhaitée, la plaque de fixation (26) soit située sensiblement à la surface du sol.

9. Structure selon l'une quelconque des revendications précédentes, ladite zone de support (24) comprenant une zone de l'élément de diamètre réduit.

10. Structure selon l'une quelconque des revendications précédentes, ladite zone de support (24) possédant une forme de section transversale sensiblement circulaire.

11. Structure selon l'une quelconque des revendications 1 à 9, ladite zone de support (24) étant de forme non circulaire.

12. Structure selon la revendication 11, ladite zone de support (24) possédant une forme comprenant une paire de zones semi-circulaires espacées par des zones plates ou droites.

13. Structure selon l'une quelconque des revendications précédentes, ladite forme en coupe transversale d'une extrémité de l'élément de support de couverture (12) épousant sensiblement une forme en coupe transversale de la zone de support (24).
